# EUROPÄISCHE PATENTANMELDUNG

(11) **EP 1 279 875 A2**
(43) Veröffentlichungstag der Anmeldung: **29.01.2003**
(21) Anmeldenummer: 02015698.0
(22) Anmeldetag: 18.07.2002
(51) Int. Cl.: F16K 17/04, F16K 41/10

(54) **Verfahren zur Dimensionierung eines federbelasteten Ventils und nach diesem Verfahren hergestelltes Ventil**

(30) Priorität: 23.07.2001 DE 10136837
(71) Anmelder: Vaillant GmbH, 42859 Remscheid (DE)
(72) Erfinder: Kaiser, Albert, 93426 Pemfing (DE)
(74) Vertreter: Hocker, Thomas

(57) **Zusammenfassung**

Verfahren zur Dimensionierung eines Sicherheitsventils (1), das ein Ventilgehäuse (2) mit einem Ventilsitz (5) und einen mit diesem unter Zwischenschaltung einer Wendeldruckfeder (13) zusammenwirkenden Ventilkörper (6) aufweist, der von einem Gehäuseeinsatz (18) am Ventilgehäuse (2) gehalten ist. Wichtig für die Einhaltung der Toleranzen des Öffnungsdrucks dieses Ventils sind die Längenmaße der Teile, die auf die Länge der Wendeldruckfeder (13) im Einbauzustand einen Einfluß haben, weiterhin die Kraft, die die Wendeldruckfeder bei ihrer Einbaulänge entwickelt. Werden diese Toleranzen in einem bestimmten Maß zuzüglich der Toleranzen gehalten, so ist der Öffnungsdruck des Ventils gewährleistet.

## Beschreibung

Die vorliegende Erfindung bezieht sich auf ein Verfahren zur Dimensionierung eines federbelasteten Ventils nach dem einleitenden Teil des unabhängigen Verfahrensanspruchs bzw. auf ein danach hergestelltes Ventil.

Marktübliche federbelastete Ventile werden beispielsweise einerseits als Überdruck- bzw. Sicherheitsventile zum anderen als Druckbegrenzungsventile eingesetzt.

Eines der Haupteinsatzgebiete sind hydraulische Schaltkreise bzw. Heizungsanlagen, bei denen der Systemdruck ein gewisses Maß nicht überschreiten darf. Diese Sicherheitsventile, soweit sie bekannt sind, besitzen ein Ventilgehäuse, das in seinem Inneren einen in der Regel kreisrunden Ventilsitz aufweist, der von einem mit einer Dichtung versehenen Ventilkörper verschlossen ist, den eine Feder belastet. Auf der dem Ventilkörper abgewandten Seite des Ventilsitzes steht der Systemdruck der Heizungsanlage an, so daß aus diesem Systemdruck, multipliziert mit der Durchtrittsfläche des Ventilsitzes, eine Kraft resultiert, gegen die die Feder anzukommen hat. Wird die Rückstellkraft der Feder durch den Systemdruck überschritten, so öffnet das Ventil, indem der Ventilkörper vom Ventilsitz abhebt. Bei Heizungsanlagen sind gängige Drücke 2,5, 3, 6 und 10 bar. Diese Drücke sind innerhalb von Toleranzen von ± 0,3 bar konstant zu halten. Es hat sich gezeigt, daß die Einhaltung dieser Drücke bei der Großserien-Herstellung der Ventile erhebliche Schwierigkeiten bereitet, so daß vormontierte Ventile erheblich größere Ansprechtoleranzen aufweisen, als eigentlich gefordert wird.

Somit besteht die der vorliegenden Erfindung zugrunde liegende Aufgabe verfahrensmäßiger Art zunächst darin, ein Verfahren anzugeben, mit dem sich die Toleranzen ohne nennenswerte Steigerung der Herstellkosten der Ventile in den Griff bekommen lassen bzw. einrichtungsmäßiger Art darin, ein Ventil dem Markt anzubieten, was die geforderten Druckabweichungstoleranzen leicht einhält, ohne im Preisrahmen gegenüber Konkurrenzventilen nennenswert teurer zu werden.

Die Lösung der Aufgabe liegt erfindungsgemäß einerseits in den Verfahrensmerkmalen des unabhängigen Verfahrensanspruchs, andererseits einrichtungsmäßig in den Merkmalen des unabhängigen Vorrichtungsanspruchs.

Ein Ausführungsbeispiel der Erfindung wird nachfolgend anhand der Darstellungen der Figuren 1 bis 8 näher erläutert.

Es zeigen:
- Fig. 1: eine Schnittdarstellung eines fertig montierten Sicherheitsventils,
- Fig. 2: ein Diagramm,
- Fig. 3: ein Ventilgehäuse,
- Fig. 4: einen Ventilkörper,
- Fig. 5: eine Topfmembran,
- Fig. 6: einen Einsatzkörper,
- Fig. 7: eine Wendeldruckfeder und
- Fig. 8: ein Diagramm.

In allen 8 Figuren bedeuten die gleichen Bezugszeichen jeweils die gleichen Einzelheiten.

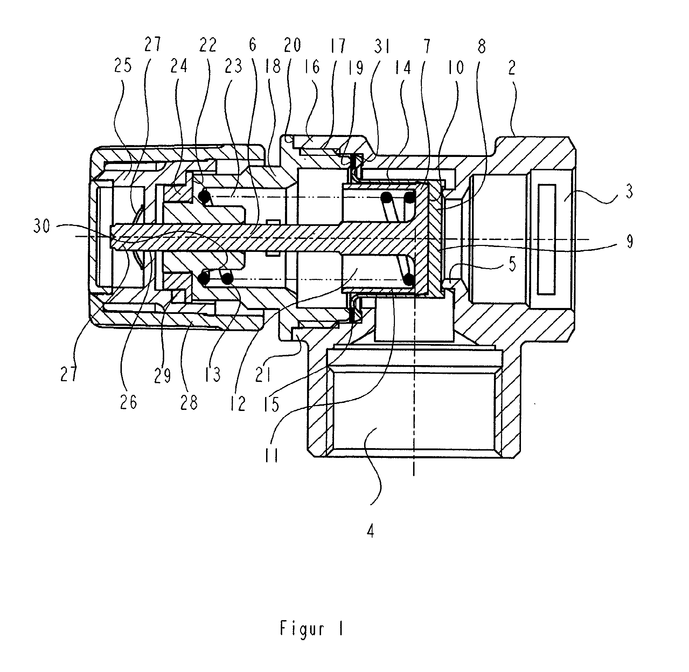

Ein Sicherheitsventil 1, das als Ganzes in Fig. 1 dargestellt ist, weist ein Ventilgehäuse 2 auf, das einen Einlaß 3 besitzt, an dem ein in seinem Druck zu begrenzendes System über eine nicht weiter dargestellte Leitung angeschlossen ist, beispielsweise eine Zentralheizungsanlage eines Gebäudes. Rechtwinklig zu ihm ist ein Auslaß 4 vorgesehen, die beide über einen Ventilsitz 5 hydraulisch in Verbindung stehen. Der Ventilsitz 5 ist kreisförmig ausgebildet, die von ihm umschlossene Fläche, multipliziert mit dem Systemdruck des angeschlossenen Heizungssystems, führt zu einer Kraft, gegen die ein Ventilkörper 6, der einen Ventilteller 7 besitzt, standzuhalten hat. Zwischen Ventilsitz 7 und Ventilkörper 6 befindet sich eine Topfmembran 8, die einen Dichtboden 9 aufweist, der sich unmittelbar zwischen der freien Stirnseite 10 des Ventiltellers 7 und dem Ventilsitz 5 befindet. Vom Ventilteller 7 erstreckt sich eine Zylinderwand 11, die einen Hohlraum 12 zwischen dem Ventilkörper 6 und der Zylinderwand 11 begrenzt. Von diesem Hohlraum ist eine Wendeldruckfeder 13 aufgenommen.

Die Topfmembran weist eine Zylinderwandung 14 und einen seitwärts abstehenden Topfrand 15 auf. Dieser Topfrand liegt an einer Stufe 16 des Gehäuses 2 an. Diese Stufe 16 ist Teil einer Aufnahmeöffnung 16, die mit der Einlaßöffnung 3 fluchtet und ihr gegenüberliegend am Gehäuse angeordnet ist. Sie weist ein Innengewinde 17 auf, in das ein Außengewinde eines Gehäuseeinsatzes 18 eingeschraubt ist. Eine Ringstirnfläche 19 dieses Gehäuseeinsatzes preßt den Topfrand 15 gegen die Stufe 16. Um die Pressung nicht zu überziehen, ist eine Anschlagfläche 20 vorgesehen, die sich gegen eine Ringstirnfläche 21 der Aufnahmeöffnung 16 anlegt. Der Gehäuseeinsatz 18 ist als zylindrischer Hohlkörper ausgeführt und weist an der der Ringstirnseite 19 abgewandten Stirnseite 22 eine Ringvertiefung 23 auf, die das andere Ende der Wendeldruckfeder 13 aufnimmt.

An die Stirnseite 22 ist ein Ringkörper 24 angesetzt, auf dem ein ringförmiges Halteteil 25 ruht. Dieses weist eine zentrale Öffnung 26 auf, durch die ein Ende 27 des Ventilkörpers 6 greift. Ein Federring 28 sichert den Ventilkörper 6 gegenüber dem Halteteil 25. Auf dem Halteteil 25 ruht ein Griff 28. Halteteil 25 und Ringkörper 24 sind über einen Treppenring 29 miteinander verbunden, der es ermöglicht, bei Verdrehen des Griffes 28 den Ventilkörper etwas gegen die Rückstellkraft der Wendeldruckfeder 13 vom Ventilsitz 5 abzuheben. Bei weiterem Drehen kommt die Treppe außer Eingriff, und der Ventilkörper wird durch die Rückstellkraft der Wendeldruckfeder 13 wieder auf den Sitz gepreßt. Dies ist notwendig, weil eine Norm es vorsieht, daß Sicherheitsventile ab und zu im Zuge von Wartungsarbeiten betätigt werden müssen.

Während der Systemdruck der Heizungsanlage im wesentlichen durch die Temperatur des in einem geschlossenen System zirkulierenden heißen Wassers vorgegeben ist, das sich bekanntermaßen bei Erwärmung ausdehnt, wirkt diesem Systemdruck der Ventilkörper mit der Rückstellkraft der Wendeldruckfeder entgegen. Auf die Größe dieser Rückstellkraft haben verschiedene Dinge, wie sich im Zuge der Erfindung herausgestellt hat, einen entscheidenden Einfluß. So liegt der erste Einfluß in der Dicke der Topfmembran, genauer in der Dicke des Dichtbodens. Je dicker dieser ist, um so mehr wird die Feder bei sonst gleichen Gegebenheiten der Einbaulage zusammengedrückt, wenn der Gehäuseeinsatz 18 mit seiner Ringstirnfläche 19 gegen die Anschlagfläche 20 geschraubt wird. Ein weiteres Toleranzfeld kommt der Federkonstante der Wendeldruckfeder 13 zu. Je höher ihre Kraft im Einbauzustand ist, um so höher ist der Ansprechdruck für das Sicherheitsventil. Die dritte Toleranz ist in der Dicke des Ventiltellers 7 des Ventilkörpers 6 zu suchen. Je dicker er ist, um so mehr wird die Feder zusammengepreßt, d. h., desto höher ist der Druck, bei dem sich das Sicherheitsventil öffnet. Ein weiterer Einflußgrund ist im Ventilgehäuse zu suchen, nämlich im Längenmaß zwischen der Anschlagfläche 20 und dem Ventilsitz 5. Eine letzte, aber wesentliche Fehlertoleranz ist im Gehäuseeinsatz 18 zu suchen, und zwar im Maß zwischen dem Ende der Ringstirnfläche 21 und dem Grund 30 der Ringvertiefung 23.

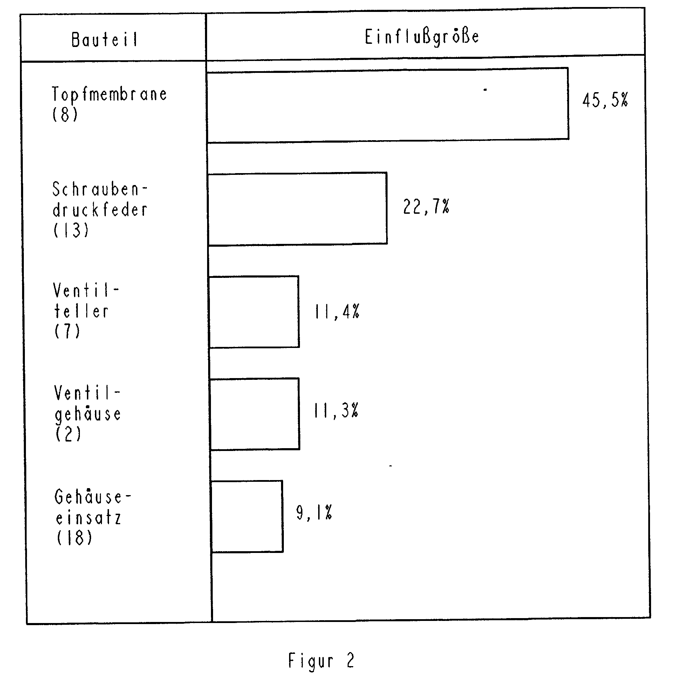

Bei einer Untersuchung von Ventilen nach dem Stand der Technik hat sich gemäß Fig. 2 herausgestellt, daß eine entscheidende Einflußtoleranzgröße die der Topfmembrane ist. Nahezu die Hälfte aller Ventile lagen außerhalb der Druckansprechtoleranz, weil der Dichtboden 9 der Topfmembran vom Sollmaß abwich. Nahezu 1/4 aller fehlerhaften Ventile fielen wegen Toleranzabweichungen der Wendeldruckfeder aus. Je etwa 10 % der Fehler waren in Toleranzabweichungen des Ventilgehäuses und des Gehäuseeinsatzes zu suchen.

Im Zuge der weiteren Entwicklung, die zur Erfindung führte, wurde nun die Toleranzkette ermittelt, die maßgeblich dafür verantwortlich ist, daß das Ventil bei nicht zuständigen Drücken öffnete oder nicht öffnete, woraus dann die Erfindung resultierte, daß diese Toleranzen in ihrem Zusammenwirken so zu tolerieren sind, daß die hieraus resultierende Gesamtrückstellkraft der Feder im Einbauzustand das Öffnen des Ventils innerhalb der vorgegebenen Toleranzen zuläßt.

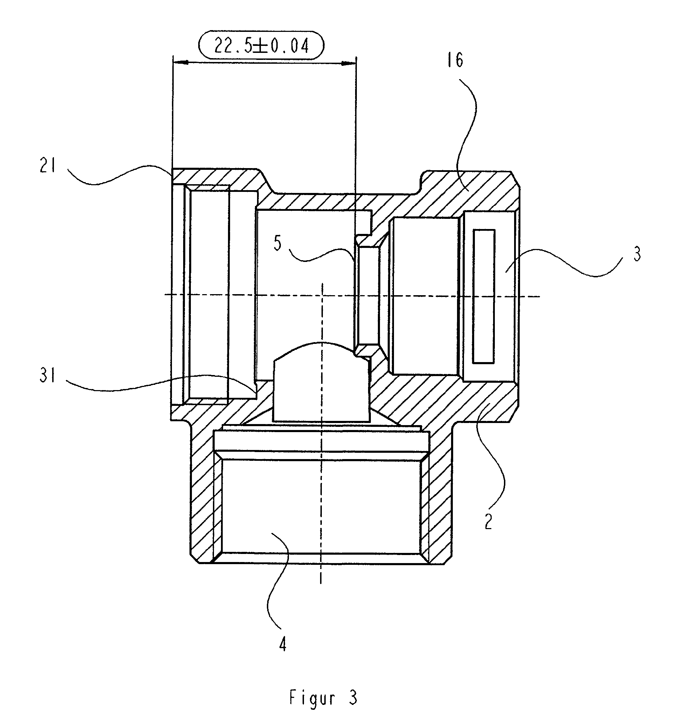

Hierzu wird zunächst zurückgegriffen auf das Ventilgehäuse 2 gemäß Figur 3. Wesentlich für die einzuhaltenden Toleranzen ist das Stichmaß zwischen dem Ventilsitz 5 und der Ringstirnfläche 21. Wird dies, wie dort angegeben, in der weiterhin angegebenen Toleranz gewährleistet, so ist auch die Toleranz des Ansprechdrucks des Sicherheitsventils 1 gewährleistet.

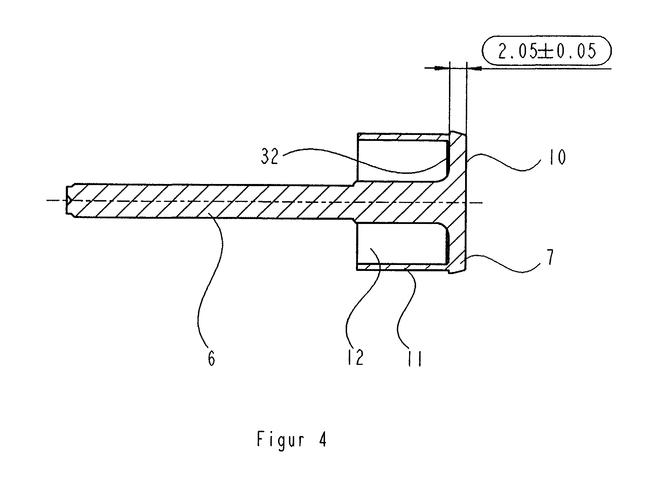

Als weiteres Bauteil wird gemäß Fig. 4 nunmehr der Ventilkörper 6 betrachtet. Für die einzuhaltende Toleranz ist hier wichtig die Dicke des Ventiltellers 7, also das Maß des Abstandes der Stirnseite 10 vom Grund 32 des Hohlraums 12. Je dicker nämlich der Ventilteller ist, um so mehr wird die Wendeldruckfeder 13 in der Einbaulage zusammengedrückt und umgekehrt. Dieses Maß und die zulässige Toleranz ist in der Fig. 4 angegeben.

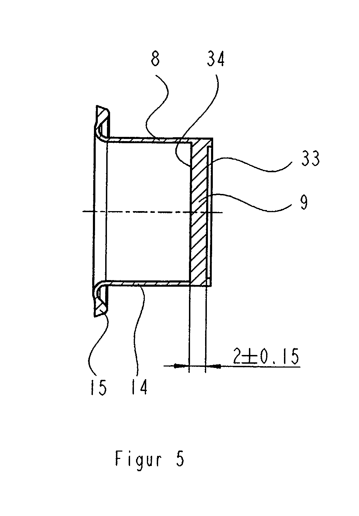

Als nächstes wird die Ausbildung der Topfmembrane 8 gemäß Fig. 5 betrachtet. Bei der Topfmembran ist wichtig die Stärke des Dichtbodens 9, also der Abstand zwischen der Außenseite 33 des Dichtbodens 9 zu dessen Innenseite 34. Auch hier ist das wesentliche Maß samt seiner Toleranz angegeben.

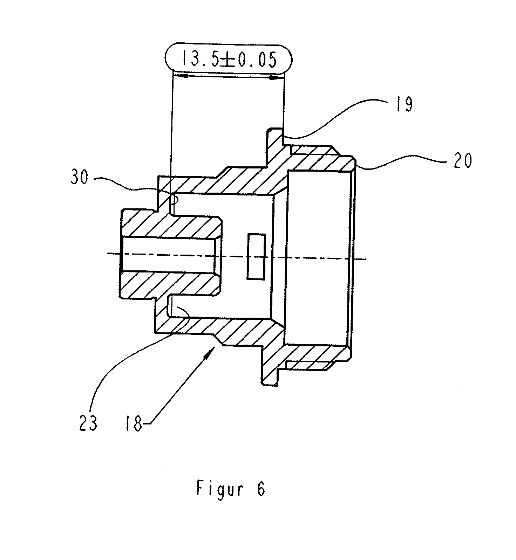

Als vorletztes Element wird der Gehäuseeinsatz 18 betrachtet, der in Fig. 6 als Detail dargestellt ist. Hier ist wichtig das Längenmaß des Abstandes vom Grund 30 zur Anschlagfläche 20. Dieses Maß ist eingezeichnet samt seiner Toleranz und ist maßgeblich für den Öffnungsdruck, bei dem das Ventil öffnet.

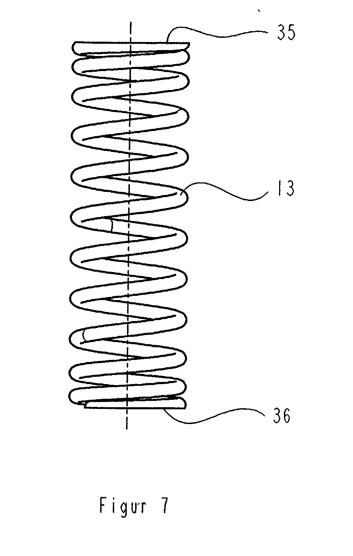

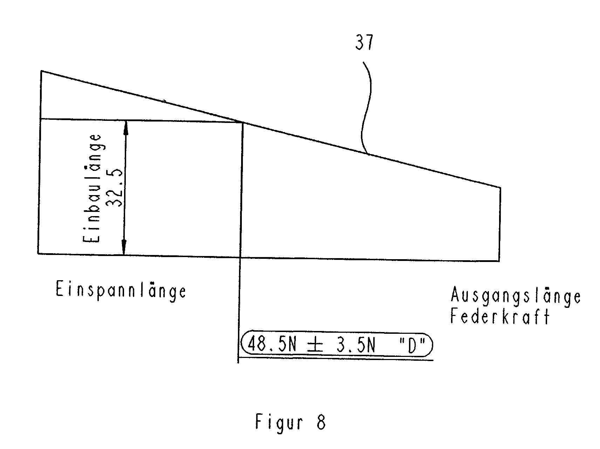

Das letzte Element, das zu betrachten ist, ist die Wendeldruckfeder 13 gemäß Figur 7. Sie erstreckt sich von einem Ende 35 bis zum anderen Ende 36, und maßgeblich ist ihre Federkraft, die einerseits auf dem Grund 30 zum anderen auf dem Grund 32 ausgeübt wird in der in der Fig. 1 dargestellten Einbaulage. Aus dieser Federkraft, dividiert durch die Fläche des Ventilsitzes 5, resultiert der Öffnungsdruck. Maßgeblich ist nun nicht die Federkonstante dieser Feder oder ihre Länge im Ruhestand gemäß Fig. 7, sondern ausschließlich die Kraft, die im Einbauzustand resultiert. Die Feder wird so dimensioniert, daß sie im Einbauzustand, also unter Berücksichtigung der eben anhand der Elemente der Bauteile von Fig. 3 bis Fig. 6 dargestellten Längenabmessungen mit ihren Toleranzen einen bestimmten Federwert von hier 48,5 N mit einer Toleranz von ± 3,5 N aufweisen muß, um den Öffnungsdruck von 3 bar mit einer Toleranz von ± 0,3 bar zu garantieren. Die Federkonstante der Wendeldruckfeder 13 geht aus der Fig. 8 hervor. In dem Diagramm ist links die Ausgangslänge gemäß Fig. 7 mit einer Federkraft 0 dargestellt, und die Federkraft steigt beim Zusammenpressen, d. h. beim Hochfahren der Kurve 37 nach links bis auf die gewünschte Federkraft mit dem angegebenen Maß bei einer Einbaulänge gemäß 32,5 mm an.

Bei der Fertigung der wesentlichen Elemente, also der Topfmembran 8, der Wendeldruckfeder 13, des Ventiltellers 7 am Ventilkörper 6 des Ventilgehäuses 2 und des Gehäuseeinsatzes 18 ist auf die strikte Einhaltung der für den Öffnungsdruck maßgeblichen Längen- bzw. Kraftmaße zu achten, dann wird automatisch beim Zusammenbau des Ventils in die Einbaulage gemäß Fig. 1 der tolerierte Öffnungsdruck eingehalten.

Nun versteht es sich von selbst, daß auch Ventile mit anderen Öffnungsdrücken gefertigt werden. Hier ändert sich lediglich die Ausbildung der Wendeldruckfeder 13, die bei einem geringeren Druck ein kleineres Maß bei der Einbaulänge von 32,5 mm aufweist oder bei höheren Öffnungsdrücken eine größere Kraft bei dieser Einbaulänge 32,5. Alle anderen Toleranzen bleiben gleich. Somit ist die Einzelteilauswahl minimiert und lediglich durch Austauschen der besonders zu tolerierenden Feder wird der Öffnungsdruck garantiert. Dies ist noch unabhängig vom Anwendungsfall und unabhängig von den jeweils einzuhaltenden Öffnungs- oder Druckbegrenzungsdrücken.

## Patentansprüche

1. Verfahren zur Dimensionierung eines federbelasteten Ventils (1), das ein Gehäuse (2) mit einem Ventilsitz (5) einem mit diesem unter Zwischenschaltung einer Feder (13) zusammenwirkenden Ventilkörper (5), der mit einem Gehäuseeinsatz (18) am Ventilgehäuse (2) gehaltert ist, **dadurch gekennzeichnet, daß** sämtliche Längenmaße der Teile, die auf die Länge der Feder (13) im Einbauzustand (Fig. 1) einen Einfluß haben, so toleriert werden, daß die aus den Einzeltoleranzen resultierende Gesamttoleranz nicht einen vorgegebenen Wert über- oder unterschreitet, so daß die Rückstellkraft der Feder (13) bei Einbaulänge, dividiert durch den Öffnungsquerschnitt des Ventilsitzes (5), den Öffnungsdruck des Ventils innerhalb der vorgegebenen Toleranz definiert.

2. Sicherheits- oder Druckbegrenzungsventil (1) mit einem Ventilgehäuse (2), das einen Ventilsitz (5) aufweist, und mit einem Ventilkörper (6), der einen Ventilteller (7) aufweist, der sich unter Zwischenschaltung einer Membran (8) gegen den Ventilsitz (5) anlegt und an dem eine Druckfeder (13) mit ihrem einen Ende (35) angreift, wobei das zweite Ende (36) der Druckfeder (13) an dem Gehäuseeinsatz (18) angreift, **dadurch gekennzeichnet, daß** die Dicke des Ventiltellers (7), die Dicke der Membran (8), das Maß vom Ventilsitz zu der Stirnfläche (21) im Ventilgehäuse, gegen die der Gehäuseeinsatz (18) geschraubt wird, und das Längenmaß der Anschlagfläche der Feder (13) im Gehäuseeinsatz bis zu der Stirnfläche, mit der der Gehäuseeinsatz gegen die Stirnfläche 21 im Ventilgehäuse geschraubt wird, so bemessen und mit solchen Toleranzen versehen ist, daß in Zusammenwirkung mit der Einspannlänge der Druckfeder (13) die Kraft erreicht wird, daß beim vorgegebenen Öffnungsdruck des Sicherheitsventils die Federkraft erreicht ist, die zum Öffnen des Ventils führt.
